# EUROPÄISCHE PATENTANMELDUNG

(11) **EP 1 288 551 A2**
(43) Veröffentlichungstag der Anmeldung: **05.03.2003**
(21) Anmeldenummer: 02017874.5
(22) Anmeldetag: 09.08.2002
(51) Int. Cl.: F16L 3/10

(54) **Anordnung aus einem Halter und einem zylindrischen Bauteil**

(30) Priorität: 25.08.2001 DE 10141672
(71) Anmelder: Rasmussen GmbH, 63477 Maintal (DE)
(72) Erfinder: Ennin, John, 63477 Maintal (DE); Schäfer, Stefan, 63452 Hanau (DE); Münsterteicher, Werner, 33758 Schloss-Holte-Stukenbrok (DE); Rastetter, Marc, 61137 Schöneck (DE)
(74) Vertreter: Knoblauch, Andreas, Dr.-Ing.

(57) **Zusammenfassung**

Bei einer Anordnung aus einem Halter (12) und einem zylindrischen Bauteil (1) ist letzteres zwischen zwei gelenkig verbundenen Armen (13, 14) des Halters (12) einklemmbar. Das zylindrische Bauteil (1) wird mittels des Halters (12) in seiner Einbaulage montiert, wobei der Halter auf dem zylindrischen Bauteil in einer vorbestimmten relativen Drehwinkellage zu dem Bauteil vormontiert wird. Um zu verhindern, daß sich Halter (12) und Bauteil (1) beispielsweise während des Transports im vormontierten Zustand relativ zueinander drehen können, ist erfindungsgemäß dafür gesorgt, daß das eine Teil (1) der beiden aus Halter (12) und zylindrischem Bauteil (1) bestehenden Teile (1; 12) auf seiner dem anderen Teil (12) zugekehrten Seite wenigstens einen Vorsprung (9) und das andere Teil (12) auf seiner dem einen Teil (1) zugekehrten Seite mehrere in Umfangsrichtung verteilte Vorsprünge (17) aufweist. Der oder jeder Vorsprung (9) des einen Teils (1) ist jeweils mit einem wählbaren Zwischenraum zwischen den Vorsprüngen (17) des anderen Teils (12) in Eingriff bringbar, so daß die beiden Teile eine von mehreren möglichen vorbestimmten relativen Drehwinkellagen zueinander einnehmen.

## Beschreibung

Die Erfindung bezieht sich auf eine Anordnung aus einem Halter und einem zylindrischen Bauteil, insbesondere einer Fluidleitung als zylindrisches Bauteil, das zwischen zwei gelenkig verbundenen, sich in Umfangsrichtung des zylindrischen Bauteils erstreckenden Armen des Halters einklemmbar ist.

In Kraftfahrzeugen werden häufig zur Vereinfachung ihrer Verlegung mit vorgeformten Abwinklungen versehene zylindrische Bauteile, z.B. Fluidleitungen, insbesondere Rohre oder Schläuche, aber auch Kabel, vor der Montage mit Haltern vormontiert, die zwei gelenkig verbundene, sich in Umfangsrichtung des zylindrischen Bauteils erstreckende Arme aufweisen, zwischen denen das zylindrische Bauteil in einer vorbestimmten Drehwinkellage relativ zu dem Halter eingeklemmt wird. Die Drehwinkellage ist so gewählt, daß das zylindrische Bauteil zusammen mit dem Halter lediglich in die gewünschte Einbaulage gebracht und dann mittels des Halters an einem Blechteil des Fahrgestells befestigt zu werden braucht. Zu diesem Zweck hat der Halter einen etwa pfeilförmigen Ankerfuß (auch "Pfeilfuß" genannt), der in ein vorgefertigtes Loch in dem Blech, ähnlich einem Druckknopf, eingerastet werden kann. Ein solcher Halter ist beispielsweise aus der DE 195 09 349 C1 bekannt. Beim Transport des Bauteils mit vormontiertem Halter kann sich der Halter jedoch relativ zu dem Bauteil verdrehen, so daß es häufig bei beengten Einbauverhältnissen schwierig ist, das zylindrische Bauteil auf einfache Weise in der vorbestimmten Einbaulage einzubauen. Der Halter muß dann erst wieder in die vorbestimmte Drehwinkellage relativ zum zylindrischen Bauteil gebracht werden, was zu Verzögerungen bei der Montage führt.

Um dies zu verhindern, offenbart die JP-2000337557 A eine Anordnung aus einem Halter und einem zylindrischen Bauteil, insbesondere einer Fluidleitung als zylindrisches Bauteil, das zwischen zwei gelenkig verbundenen, sich in Umfangsrichtung des zylindrischen Bauteils erstreckenden Armen des Halters einklemmbar ist. Das zylindrische Bauteil weist auf seiner dem Halter zugekehrten Seite zwei Vorsprünge und der Halter auf seiner dem zylindrischen Bauteil zugekehrten Seite mehrere in Umfangsrichtung verteilte Vorsprünge auf. Die Vorsprünge des zylindrischen Bauteils sind jeweils mit einem wählbaren Zwischenraum zwischen den Vorsprüngen des Halters in Eingriff bringbar, so daß Halter und zylindrisches Bauteil zwei verschiedene relative Drehwinkellagen zueinander einnehmen können. Die Arme haben Fortsätze, die sich über eine größere Länge vom Umfang des zylindrischen Bauteils weg erstrecken und an ihren freien Enden durch einen Verschluß verbunden sind. Daher können sich die Arme, wenn auf das zylindrische Bauteil oder den Halter, insbesondere über dessen längere Armfortsätze, ein höheres Drehmoment relativ zu dem jeweils anderen Teil - Halter oder zylindrisches Bauteil - ausgeübt wird, radial durch die von den Vorsprüngen des einen Teils auf die Vorsprünge des anderen Teils ausgeübten Druckkräfte aufspreizen, so daß sich die beiden Teile relativ zueinander verdrehen.

Der Erfindung liegt die Aufgabe zugrunde, eine Anordnung der eingangs genannten Art anzugeben, bei der der Halter seine vormontierte Lage relativ zu dem zylindrischen Bauteil mit hoher Sicherheit beibehält.

Erfindungsgemäß ist diese Aufgabe durch die Merkmale des Anspruchs 1 gelöst.

Bei dieser Lösung kann der Halter in verschiedenen vorbestimmten Drehwinkellagen relativ zu dem zylindrischen Körper vormontiert werden, um ihn dann zusammen mit dem zylindrischen Bauteil in der vorbestimmten Einbaulage zu montieren. Wegen des gegenseitigen Eingriffs der Vorsprünge beider Teile und der das zylindrische Bauteil eng und fest umschließenden Arme behalten die beiden Teile ihre vorbestimmte relative Drehwinkellage selbst dann bei, wenn ein höheres Drehmoment auf das eine Teil relativ zum anderen Teil ausgeübt wird, z.B. während eines Transports der beiden vormontierten Teile. Der Verschluß ermöglicht ferner eine Anpassung des Halterdurchmessers an unterschiedliche Durchmesser des zylindrischen Bauteils.

Vorzugsweise ist jeder Vorsprung des zylindrischen Bauteils als axiale Rippe auf der Außenseite des Bauteils ausgebildet. Derartige Vorsprünge halten zum einen relativ hohen Biegekräften bei Ausübung eines höheren Drehmoments auf das andere Teil stand und erhöhen zum anderen die Biegesteifigkeit des zylindrischen Bauteils um seine Querachse in dem mit den Rippen versehenen Bereich, was besonders bei Fluidleitungen im Kraftfahrzeugbau von Vorteil ist.

So kann das zylindrische Bauteil bei einer Ausbildung als Fluidleitung mehrere axiale Rippen aufweisen, von denen wenigstens eine in einem ansonsten glatten Abschnitt der Fluidleitung ausgebildet ist. Ein glatter Abschnitt einer Fluidleitung soll sich in der Regel nicht verbiegen, auch wenn er aus Gummi oder flexiblem Kunststoff besteht.

Ferner kann auch jeder Vorsprung des Halters als axiale Rippe ausgebildet sein. Die Belastbarkeit des oder jedes Vorsprungs des Halters in Umfangsrichtung des Halters und die Biegesteifigkeit des Halters sind dann ebenfalls höher.

Sodann kann das zylindrische Bauteil bei Ausbildung als Fluidleitung in wenigstens einem axialen Abschnitt mit Wellungen versehen sein, wobei wenigstens eine Rippe des Bauteils zwischen benachbarten Wellungen angeordnet sein kann und der Halter mehrere Vorsprünge aufweist, die als wenigstens eine sich in Umfangsrichtung erstreckende Reihe von Zähnen ausgebildet sind. Der Halter kann dann sowohl mit einem gewellten Abschnitt, der mit einer oder mehreren Rippen zwischen benachbarten Wellungen versehen ist, als auch mit einem mit dem Vorsprung oder den Vorsprüngen oder der Rippe bzw. den Rippen versehenen glatten Abschnitt zur gegenseitigen Drehsicherung in Eingriff gebracht werden.

Vorzugsweise ist dafür gesorgt, daß der Halter zwei parallele, sich in Umfangsrichtung erstreckende Zahnreihen aufweist, deren Zahnlücken mit Rippen zwischen den Wellungen jeweils eines von zwei Wellungspaaren in Eingriff bringbar sind. Auf diese Weise wird ebenfalls die Belastbarkeit der Verbindung beider Teile gegen Verdrehung erhöht.

Ferner ist es vorteilhaft, wenn die Zahnreihen gleiche Teilungen aufweisen und um ihre halbe Teilung in Umfangsrichtung relativ zueinander versetzt sind und die Teilungen der Rippen zwischen den Wellungspaaren ein ganzzahliges Vielfaches der halben Teilung der Zahnreihen betragen. Auf diese Weise kommt man mit einer geringeren Anzahl von Vorsprüngen bzw. Zähnen aus als wenn die Zahnlückenweite etwa gleich der Zahnbreite ist.

Zwischen den benachbarten Wellungen kommt man mit vier gleichmäßig über den Umfang des zylindrischen Bauteils verteilten Vorsprüngen aus.

Desgleichen kommt man mit vier gleichmäßig über den Umfang des zylindrischen Bauteils verteilten Vorsprüngen in den glatten Abschnitten des Bauteils aus.

Vorzugsweise sind die Vorsprünge des Halters nur an seinem einen Arm über nahezu dessen gesamte Umfangslänge gleichmäßig verteilt ausgebildet. Dies trägt ebenfalls zur Verringerung der Anzahl der Vorsprünge und damit des Materials bei. Dennoch ist eine Einstellung der relativen Drehwinkellagen der beiden Teile nahezu über den gesamten Bereich von 360° möglich.

Die gelenkige Verbindung der Arme des Halters kann in einfacher Weise als Filmgelenk ausgebildet sein.

Vorzugsweise ist ferner dafür gesorgt, daß sich die Arme des Halters neben dem Filmgelenk überlappen und an dem im Überlappungsbereich radial innen liegenden Ende des einen Arms ein radial nach außen ragender Haken ausgebildet ist, der durch ein Loch des anderen Arms hindurchgreifend hinter dem Lochrand einrastbar ist. Durch diese Ausbildung wird das Filmgelenk weniger durch radiale Kräfte belastet, die bestrebt sind, den Halter aufzuweiten.

Besonders einfach herzustellen und zu handhaben ist eine Ausbildung des Verschlusses als Rastverschluß.

Die Erfindung und ihre Weiterbildungen werden nachstehend anhand der beiliegenden Zeichnungen bevorzugter Ausführungsbeispiele näher beschrieben. Darin stellen dar:
- Fig. 1: eine Seitenansicht einer erfindungsgemäßen Anordnung, teilweise aufgebrochen und im Axialschnitt,
- Fig. 2: eine perspektivische Ansicht des in der Anordnung nach Fig. 1 dargestellten zylindrischen Bauteils, hier einer Fluidleitung,
- Fig. 3: den Schnitt III-III der Fig. 1,
- Fig. 4: den Schnitt IV-IV der Fig. 1,
- Fig. 5: eine Seitenansicht des in Fig. 1 und 3 dargestellten Halters,
- Fig. 6: eine andere Seitenansicht des Halters nach Fig. 5,
- Fig. 7: die Draufsicht des Halters nach Fig. 6,
- Fig. 8: eine perspektivische Ansicht des Halters nach den Fig. 3 und 5 bis 7,
- Fig. 9: eine perspektivische Ansicht des in Fig. 1 rechts und in Fig. 4 dargestellten Halters,
- Fig. 10: eine perspektivische Ansicht eines gegenüber dem Halter nach den Fig. 3 und 5 bis 8 abgewandelten Halters und
- Fig. 11: eine Seitenansicht des Halters nach Fig. 10.

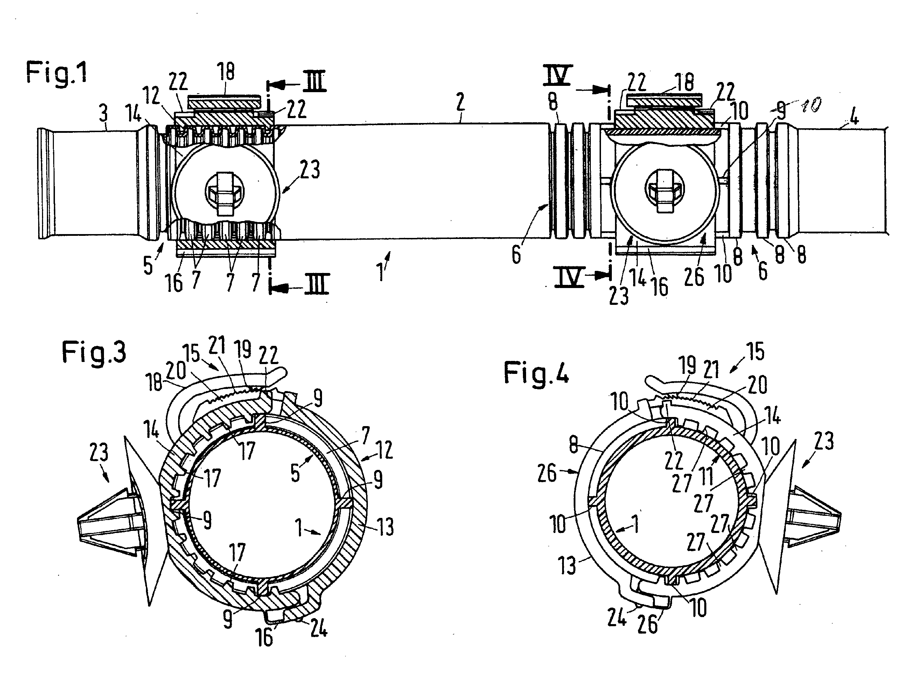

Die Anordnung und deren Teile nach den Fig. 1 bis 9 besteht aus einem zylindrischen Bauteil 1 in Form einer Fluidleitung, hier eines Rohres mit glatten Abschnitten 2, 3 und 4 sowie gewellten Abschnitten 5 und 6. Diese gewellten Abschnitte 5 und 6 sind mit Wellungen 7 und 8 versehen, um das zylindrische Bauteil 1 bzw. Rohr in den gewellten Abschnitten 5 und 6 flexibel auszubilden.

Zwischen einem ersten Wellungspaar aus benachbarten Wellungen 7 und einem zweiten Wellungspaar aus benachbarten Wellungen 7 des gewellten Abschnitts 5, wobei der glatte Abschnitt 2 eine sich über seine gesamte Länge erstreckende Wellung 7 bildet, befinden sich jeweils vier gleichmäßig über den Umfang verteilte Vorsprünge 9 in Form kurzer axialer Rippen, die die beiden Wellungen 7 eines Wellungspaares verbinden, ohne die Biegsamkeit des gewellten Abschnitts 5 merklich zu beeinträchtigen. Statt der vier Vorsprünge 9 kann auch nur ein Vorsprung 9 zwischen den beiden Wellungen 7 jedes Wellungspaares vorgesehen sein. Es ist aber auch möglich, eine andere Anzahl der Vorsprünge 9 als eins oder vier zu wählen.

Zwischen den beiden anderen gewellten Abschnitten 6 sind ebenfalls vier gleichmäßig über den Umfang verteilte Vorsprünge 10 in Form axialer Rippen in einem im übrigen glatten Abschnitt 11 ausgebildet. Statt der vier Vorsprünge 10 kann auch im Abschnitt 11 nur ein Vorsprung 10 oder eine andere Anzahl von Vorsprüngen 10 vorgesehen sein.

Der gewellte Abschnitt 5 ist von einem Halter 12 umgeben, der zwei gelenkig verbundene, sich in Umfangsrichtung des zylindrischen Bauteils 1 erstreckende Arme 13 und 14 aufweist, die etwa diametral gegenüber einem Verschluß 15, der als Rastverschluß ausgebildet ist, durch ein Filmgelenk 16 gelenkig verbunden sind.

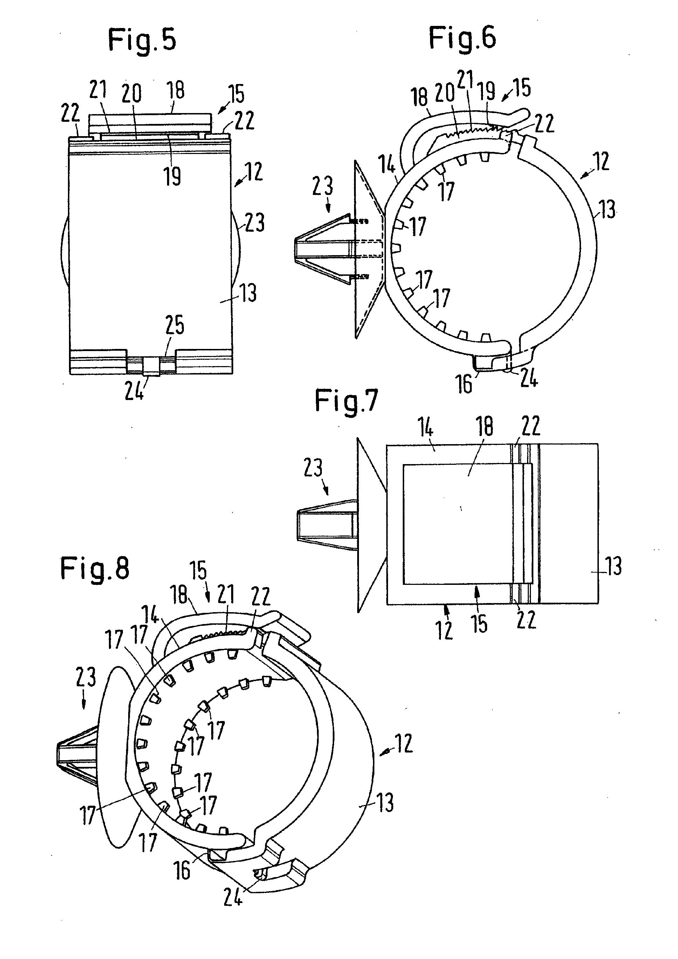

Der Arm 14 ist auf seiner Innenseite in der Nähe seiner Umfangsränder mit jeweils einer Reihe von in gleichen Abständen auseinanderliegenden Vorsprüngen 17 in Form von etwa trapezförmigen Zähnen versehen (siehe insbesondere Fig. 8). Wenn der Halter 12 den gewellten Abschnitt 5 umgibt, wie es in Fig. 1 dargestellt ist, greifen immer zwei Vorsprünge 9, die jeweils zwischen den Wellungspaaren 7 angeordnet sind, in einen Zwischenraum der Zwischenräume zwischen den Vorsprüngen 17 mit seitlichem Abstand oder Spiel ein. Ebenso wie die Vorsprünge 9 zwischen zwei benachbarten Wellungen 7 jeweils mit einem Vorsprung 9 zwischen den beiden anderen benachbarten Wellungen 7 in Axialrichtung fluchten, so fluchten auch die Vorsprünge 17 der beiden Reihen von Vorsprüngen 17 paarweise in Axialrichtung miteinander, so daß in der Axialansicht nach Fig. 6 nur die Vorsprünge 17 der einen Reihe sichtbar sind. Die Teilung der Vorsprünge 9 beträgt hierbei ein ganzzahliges Vielfaches der Teilung der Vorsprünge 17.

Der Verschluß 15 besteht aus einer am Umfang des Arms 14 angeformten, nach außen gewölbten Lasche 18, die in der Nähe ihres freien Endes innen mit einer Verzahnung 19 versehen ist, und aus einer am freien Ende des anderen Arms 13 angeformten gekrümmten Zunge 20, deren Krümmungsradius etwa der Krümmung der Außenseite des Arms 14 entspricht. Die Zunge 20 ist auf ihrer radial äußeren Seite ebenfalls mit einer Verzahnung 21 versehen, die beim Schließen des Halters 12 mit der Verzahnung 19 in Eingriff kommt, wobei der Halter 12 gespannt wird. Die Zunge 20 erstreckt sich zwischen zwei an dem freien Ende des Arms 14 radial nach außen ragenden Vorsprüngen 22 hindurch, die die Zunge 21 beim Schließen des Verschlusses 15 in Umfangsrichtung führen.

Der Halter 12 ist ferner mit einem Ankerfuß 23 in Form eines "Pfeilfußes" versehen, der ähnlich einem Druckknopf in ein Loch eines Bleches eingerastet werden kann, um den Halter und das zylindrische Bauteil 1 in der gewünschten Einbaulage zu fixieren.

Vor dem Einbau der Anordnung aus dem zylindrischen Bauteil 1 und dem Halter 12 in der der gewünschten Einbaulage des zylindrischen Bauteils 1 entsprechenden Drehwinkellage relativ zu dem Halter 12 wird das Bauteil 1 in diesem angeordnet, wobei die Vorsprünge 9 vor dem Schließen des Verschlusses 15 mit entsprechenden Zwischenräumen zwischen den Vorsprüngen 17 in Eingriff gebracht werden. Nach dem Schließen des Verschlusses 15 können sich die beiden Teile 1 und 12 nicht mehr relativ zueinander verdrehen, sei es während des Transports oder in der endgültigen Einbaulage der Anordnung.

Der Arm 14 ist an seinem dem Verschluß 15 diametral gegenüberliegendenEnde mit einem radial nach außen ragenden Haken 24 versehen. Der Haken 24 ist durch ein schlitzförmiges Loch 25 in einem dieses Ende überlappenden, abgekröpften Endabschnitt des Arms 13 hindurchgeführt und übergreift die Außenseite des Arms 13 im geschlossenen Zustand des Halters 12. Dadurch wird verhindert, daß sich die Arme 13 und 14 im geschlossenen Zustand des Halters 12 aufgrund der Biegsamkeit des Filmgelenks 16 radial zueinander verschieben.

Der Halter 12 nach den Fig. 1, 3 und 5 bis 8 mit den Vorsprüngen 17 in Form zweier paralleler Zahnreihen hat den Vorteil, daß er sowohl im Abschnitt 5 als auch im Abschnitt 11 des zylindrischen Bauteils 1 verwendet werden kann.

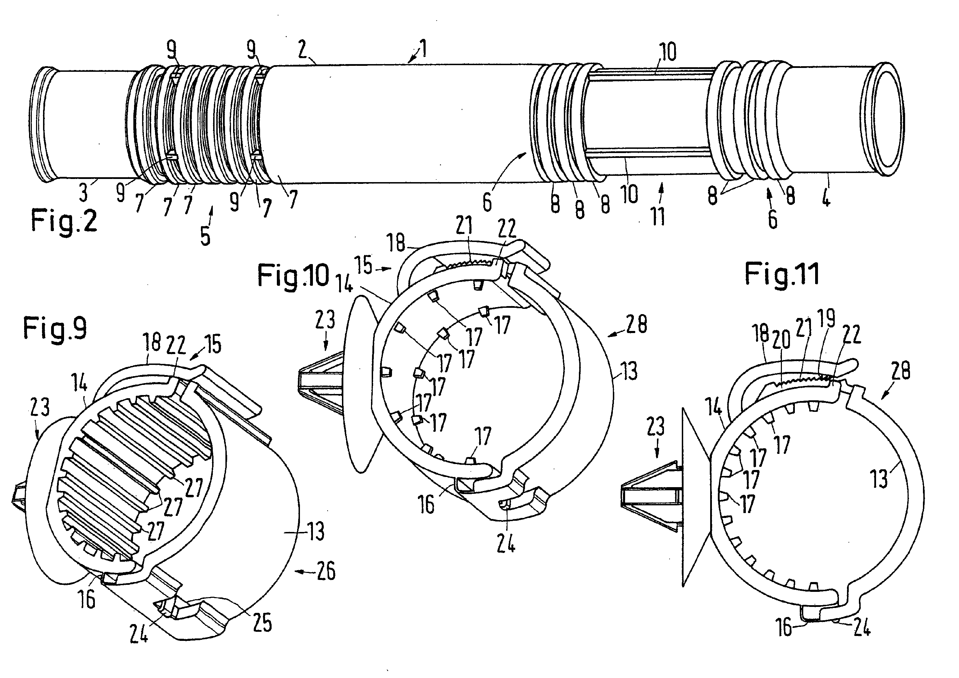

Der den Abschnitt 11 (Fig. 2) des zylindrischen Bauteils 1 umschließende Halter 26 (Fig. 1, 4 und 9) ist ebenso wie der Halter 12 ausgebildet, nur daß seine Vorsprünge 27 als axial durchgehende Rippen ausgebildet sind (vergleiche Fig. 9). Die Vorsprünge 10 und 27 könnten ebenso kurz wie die Vorsprünge 9 und 17 ausgebildet sein. Als axial durchgehende Rippen sind sie in Umfangsrichtung jedoch höher belastbar, ohne sich zu verformen. Darüber hinaus tragen die axialen Rippen 10 im Abschnitt 11 zur Versteifung des zylindrischen Bauteils 1 gegen eine Verbiegung um eine Querachse des Bauteils bei.

Die Fig. 10 und 11 stellen ein gegenüber dem Halter 12 etwas abgewandeltes Ausführungsbeispiel eines Halters 28 dar: Die durch die Vorsprünge 17 gebildeten Zahnreihen haben zwar ebenfalls gleiche Teilungen, sind jedoch um ihre halbe Teilung in Umfangsrichtung relativ zueinander versetzt. Die Teilung der Vorsprünge 9 zwischen den Wellungspaaren im Abschnitt 5 beträgt ein ganzzahliges Vielfaches der halben Teilung der Zahnreihen aus den Vorsprüngen 17. Die Weite der Lücken zwischen den Vorsprüngen 17 ist etwas größer als das Doppelte der Breite der Vorsprünge 9, jeweils auf dem Teilkreis gemessen. Mit anderen Worten, bei dem Halter 28 ist im Vergleich zu dem Halter 12 jeder zweite Vorsprung 17 (Zahn) in jeder Zahnreihe weggelassen, so daß zwar die in den Fig. 6 und 11 dargestellten Seitenansichten der Halter 12 und 28 einander gleichen, der Halter 28 jedoch nur die halbe Anzahl von Vorsprüngen 17 im Vergleich zu der des Halters 12 aufweist. Der Halter 28 wird daher in Fällen benutzt, in denen ein geringeres Drehmoment zwischen dem zylindrischen Bauteil 1 und dem Halter 28 zu erwarten ist. Er kommt dagegen mit weniger Material aus.

Sowohl das zylindrische Bauteil 1 als auch die Halter 12, 26 und 28 sind aus thermoplastischem Kunststoff hergestellt.

## Patentansprüche

1. Anordnung aus einem Halter (12; 26; 28) und einem zylindrischen Bauteil (1), insbesondere einer Fluidleitung als zylindrisches Bauteil, das zwischen zwei gelenkig verbundenen, sich in Umfangsrichtung des zylindrischen Bauteils (1) erstrekkenden Armen (13, 14) des Halters einklemmbar ist, das eine Teil (1) der beiden aus Halter (12; 26; 28) und zylindrischem Bauteil (1) bestehenden Teile (1; 12; 26; 28) auf seiner dem anderen Teil (12; 26; 28) zugekehrten Seite wenigstens einen Vorsprung (9; 10) und das andere Teil (12; 26; 28) der beiden Teile auf seiner dem einen Teil (1) zugekehrten Seite mehrere in Umfangsrichtung verteilte Vorsprünge (17; 27) aufweist, wobei der oder jeder Vorsprung (9; 10) des einen Teils (1) jeweils mit einem wählbaren Zwischenraum zwischen den Vorsprüngen (17; 27) des anderen Teils (12; 26; 28) in Eingriff bringbar ist, so daß die beiden Teile eine von mehreren möglichen vorbestimmten relativen Drehwinkellagen zueinander einnehmen, wobei die Arme (13, 14) des Halters (12; 26; 28) als Halbschalen ausgebildet und gegenüber ihrer gelenkigen Verbindung (16) durch einen spannbaren Verschluß (15) verbunden sind.

2. Anordnung nach Anspruch 1, **dadurch gekennzeichnet, daß** jeder Vorsprung (9; 10) des zylindrischen Bauteils (1) als axiale Rippe auf der Außenseite des zylindrischen Bauteils (1) ausgebildet ist.

3. Anordnung nach Anspruch 2, **dadurch gekennzeichnet, daß** das zylindrische Bauteil (1) bei einer Ausbildung als Fluidleitung mehrere axiale Rippen (10) aufweist, von denen wenigstens eine in einem glatten Abschnitt (11) der Fluidleitung ausgebildet ist.

4. Anordnung nach Anspruch 3, **dadurch gekennzeichnet, daß** jeder Vorsprung (27) des Halters (26) als axiale Rippe ausgebildet ist.

5. Anordnung nach Anspruch 2, **dadurch gekennzeichnet, daß** das zylindrische Bauteil (1) bei einer Ausbildung als Fluidleitung in wenigstens einem axialen Abschnitt (5) mit Wellungen (7) versehen ist, daß wenigstens eine Rippe (9) des Bauteils (1) zwischen benachbarten Wellungen (7) angeordnet ist, daß der Halter (12; 28) mehrere Vorsprünge (17) aufweist, die als wenigstens eine sich in Umfangsrichtung erstreckende Reihe von Zähnen ausgebildet sind.

6. Anordnung nach Anspruch 5, **dadurch gekennzeichnet, daß** der Halter (12; 28) zwei parallele, sich in Umfangsrichtung erstreckende Zahnreihen (17) aufweist, deren Zahnlücken mit Rippen (9) zwischen den Wellungen (7) jeweils eines von zwei Wellungspaaren in Eingriff bringbar sind.

7. Anordnung nach Anspruch 6, **dadurch gekennzeichnet, daß** die Zahnreihen (17) gleiche Teilungen aufweisen und um ihre halbe Teilung in Umfangsrichtung relativ zueinander versetzt sind und daß die Teilungen der Rippen (9) zwischen den Wellungspaaren (7) ein ganzzahliges Vielfaches der halben Teilung der Zahnreihen (17) betragen.

8. Anordnung nach einem der Ansprüche 5 bis 7, **dadurch gekennzeichnet, daß** vier gleichmäßig über den Umfang des zylindrischen Bauteils (1) verteilte Vorsprünge (9) zwischen den benachbarten Wellungen (7) ausgebildet sind.

9. Anordnung nach einem der Ansprüche 3 und 5 bis 8, **dadurch gekennzeichnet, daß** vier gleichmäßig über den Umfang des zylindrischen Bauteils (1) verteilte Vorsprünge (10) in wenigstens einem glatten Abschnitt (11) des Bauteils (1) ausgebildet sind.

10. Anordnung nach einem der Ansprüche 1 bis 9, **dadurch gekennzeichnet, daß** die Vorsprünge des Halters (12; 26; 28) nur an seinem einen Arm (14) über nahezu dessen gesamte Umfangslänge gleichmäßig verteilt ausgebildet sind.

11. Anordnung nach einem der Ansprüche 1 bis 10, **dadurch gekennzeichnet, daß** die gelenkige Verbindung der Arme (13, 14) des Halters (12; 26; 28) als Filmgelenk (16) ausgebildet ist.

12. Anordnung nach Anspruch 11, **dadurch gekennzeichnet, daß** sich die Arme (13, 14) des Halters (12; 26; 28) neben dem Filmgelenk (16) überlappen und an dem im Überlappungsbereich radial innen liegenden Ende des einen Arms (14) ein radial nach außen ragender Haken (24) ausgebildet ist, der durch ein Loch (25) des anderen Arms (13) hindurchgreifend hinter dem Lochrand einrastbar ist.

13. Anordnung nach einem der Ansprüche 1 bis 12, **dadurch gekennzeichnet, daß** der Verschluß (15) ein Rastverschluß ist.
